# EUROPEAN PATENT APPLICATION

(11) **EP 4 671 961 A1**
(43) Date of publication of application: **31.12.2025**
(21) Application number: 24760138.8
(22) Date of filing: 07.02.2024
(51) Int. Cl.: G06F 3/16, G06F 3/14

(54) **ELECTRONIC DEVICE, METHOD FOR CONTROLLING ELECTRONIC DEVICE, AND PROGRAM**

(30) Priority: 20.02.2023 JP 2023024726
(71) Applicant: KYOCERA Document Solutions Inc., Osaka-shi, Osaka 540-8585 (JP)
(72) Inventor: NAKAMURA Masatsugu, Kyoto-shi, Kyoto 612-8501 (JP)
(74) Representative: Viering, Jentschura & Partner mbB Patent- und Rechtsanwälte
(86) International application number: PCT/JP2024/004172
(87) International publication number: WO 2024/176836

(57) **Abstract**

A program causes an electronic device that displays characters on a display including a first display area and a second display area to perform the following steps. Displaying characters of a first language in the first display area. Displaying characters of a second language in the second display area. Displaying either the characters of the first language or the characters of the second language in a horizontally reversed manner. Based on a first display amount in which the characters of the first language are displayed in the first display area and a second display amount in which the characters of the second language are displayed in the second display area, adjusting at least one of the first display amount or the second display amount.

## Description

### CROSS-REFERENCE TO RELATED APPLICATIONS

This application claims priority of Japanese Patent Application No. 2023-24726 filed in Japan on February 20, 2023, the entire disclosure of which is hereby incorporated by reference.

### TECHNICAL FIELD

The present disclosure relates to an electronic device, a method for controlling an electronic device, and a program.

### BACKGROUND OF INVENTION

A display system has been proposed that automatically converts a speaker's voice into text and displays captions in real time on a transparent display provided between the speaker and a hearing-impaired listener (see, for example, Non-Patent Literature 1). In this display system, the normal characters of the listener's side are displayed in an upper part of the transparent display, and the normal characters of the speaker's side are displayed in a lower part of the transparent display. The characters in the lower part of the transparent display are displayed so that the speaker can check for misconversions in automatic speech recognition. In addition, a translation display device that can smoothly assist conversations between speakers who use different languages has been proposed (see, for example, Patent Literature 1). This device uses a single display means to display character strings in language A and character strings in language B in two separate facing display areas A1 and B1, so that the characters are displayed in an orientation that is easy for each user to read.

### CITATION LIST

### NON PATENT LITERATURE

Non-Patent Literature 1: Kenta Yamamoto, Ippei Suzuki, Akihisa Shitara, and Yoichi Ochiai, 2021. "See-Through Captions: Real-Time Captioning on Transparent Display for Deaf and Hard-of-Hearing People", [online], 27 Jan 2021, In arXiv e-prints. 5 pages, Internet <URL: https://arxiv.org/abs/2101.11326>

### PATENT LITERATURE

Patent Literature 1: Japanese Unexamined Patent Application Publication No. 2019-70915

### SUMMARY

In an embodiment, (1) a program causes an electronic device that displays characters on a display including a first display area and a second display area to perform the following steps.
Displaying characters of a first language in the first display area
Displaying characters of a second language in the second display area
Displaying either the characters of the first language or the characters of the second language in a horizontally reversed manner

Based on a first display amount in which the characters of the first language are displayed in the first display area and a second display amount in which the characters of the second language are displayed in the second display area, adjusting at least one of the first display amount or the second display amount
(2) The program of (1) above, in which when the first language and the second language are different languages, the program causes the electronic device to perform the following steps.
   Displaying the characters of the second language as a translation of the characters of the first language
   Displaying characters of the second language based on the characters of the second language being confirmed as a sentence
(3) The program of (1) or (2) above, in which when the first language and the second language are different languages, the program causes the electronic device to perform the following steps.
   Displaying the characters of the second language as a translation of the characters of the first language
   Not displaying the characters of the second language until the characters of the second language are confirmed as a sentence
(4) The program of any one of (1) to (3) above, in which the program causes the electronic device to perform adjusting at least one of the first display amount or the second display amount when content of the first display amount does not correspond to content of the second display amount.
(5) The program of any one of (1) to (4) above, in which the program causes the electronic device to perform adjusting at least one of the first display amount or the second display amount by changing a size of at least one of the characters of the first language or the characters of the second language.
(6) The program of any one of (1) to (5) above, in which the program causes the electronic device to perform adjusting at least one of the first display amount or the second display amount by changing at least one of a character spacing or a line spacing of at least one of the characters of the first language or the characters of the second language.
(7) The program of (1) above, in which when the first language and the second language are the same language, the program causes the electronic device to perform adjusting a difference between timings at which a phrase made up of the characters of the first language and a phrase made up of the characters of the second language are displayed on the display so that the timings are within a predetermined time.
(8) The program of any one of (1) to (7) above, in which the program causes the electronic device, in which the first display area of the display is provided with a light-shielding portion that at least partially blocks transmission of light, to perform displaying the characters of the first language in the first display area so as to be shielded by the light-shielding portion.
(9) The program of any one of (1) to (8), in which the program causes the electronic device to perform erasing at least the characters of the second language displayed in the second display area, when the second language is changed to a third language different from the second language.

In an embodiment, (10) an electronic device includes a controller that performs control to display characters on a display including a first display area and a second display area.

The controller displays characters of a first language in the first display area,
displays characters of a second language in the second display area,
displays either the characters of the first language or the characters of the second language in a horizontally reversed manner, and
based on a first display amount in which the characters of the first language are displayed in the first display area and a second display amount in which the characters of the second language are displayed in the second display area, adjusts at least one of the first display amount or the second display amount.

In an embodiment, (11) a control method controls an electronic device that displays characters on a display including a first display area and a second display area. The control method includes the following steps.
Displaying characters of a first language in the first display area
Displaying characters of a second language in the second display area
Displaying either the characters of the first language or the characters of the second language in a horizontally reversed manner
Based on a first display amount in which the characters of the first language are displayed in the first display area and a second display amount in which the characters of the second language are displayed in the second display area, adjusting at least one of the first display amount or the second display amount

### BRIEF DESCRIPTION OF THE DRAWINGS

FIG. 1 is a perspective view illustrating a usage scene of a projector display system according to an embodiment.
FIG. 2 is a schematic configuration diagram of the projector display system in FIG. 1.
FIG. 3 is a diagram illustrating an example of display on a transparent screen as seen from a first user side.
FIG. 4 is a diagram illustrating an example of display on a transparent screen as seen from a second user side.
FIG. 5 is a diagram illustrating the relationship between the arrangement of a light-shielding portion and a second user in an embodiment.
FIG. 6 is a diagram illustrating an example of the arrangement of a screen unit and a light-shielding portion.
FIG. 7 is a diagram illustrating an example of the arrangement of a screen unit and a light-shielding portion.
FIG. 8 is a diagram illustrating an example of the arrangement of a screen unit and a light-shielding portion.
FIG. 9 is a diagram illustrating an example of the arrangement of a screen unit and a light-shielding portion.
FIG. 10 is a schematic configuration diagram of a projector display system according to an embodiment that uses an external cloud server for speech recognition.
FIG. 11 is a top view illustrating an example of the arrangement of each component of a projector display system.
FIG. 12A is a diagram illustrating an example of operation of a projector display system of the related art.
FIG. 12B is a diagram illustrating an example of operation of a projector display system according to an embodiment.
FIG. 13 is a flowchart explaining operation of the projector display system according to an embodiment.
FIG. 14A is a diagram illustrating an example of operation of a projector display system according to an embodiment.
FIG. 14B is a diagram illustrating an example of operation of a projector display system according to an embodiment.
FIG. 15 is a flowchart for explaining operation of a projector display system according to an embodiment.
FIG. 16 is a diagram illustrating an example of operation of a projector display system according to an embodiment.
FIG. 17 is a flowchart explaining operation of a projector display system according to an embodiment.
FIG. 18A is a diagram illustrating an example of operation of a projector display system according to an embodiment.
FIG. 18B is a diagram illustrating an example of operation of a projector display system according to an embodiment.
FIG. 18C is a diagram illustrating an example of operation of a projector display system according to an embodiment.
FIG. 19A is a diagram illustrating an example of operation of a projector display system according to an embodiment.
FIG. 19B is a diagram illustrating an example of operation performed by a projector display system according to an embodiment.
FIG. 20 is a flowchart explaining operation of a projector display system according to an embodiment.
FIG. 21A is a diagram illustrating an example of operation of a projector display system according to an embodiment.
FIG. 21B is a diagram illustrating an example of operation of a projector display system according to an embodiment.
FIG. 21C is a diagram illustrating an example of operation of a projector display system according to an embodiment.

### DESCRIPTION OF EMBODIMENTS

When using a device as described above to display characters of different languages on the same screen, displaying the characters of each language appropriately in each display area is desirable in order to facilitate communication between the interlocutors. The present disclosure provides an electronic device, a method for controlling an electronic device, and a program that facilitate communication between interlocutors. According to an embodiment, an electronic device, a method for controlling an electronic device, and a program can facilitate communication between interlocutors.

Embodiments of the present disclosure are described below while referring to the drawings. The drawings used in the following description are schematic drawings. The dimensions and proportions in the drawings do not necessarily correspond to the actual dimensions and proportions.

### (Configuration of Projector Display System)

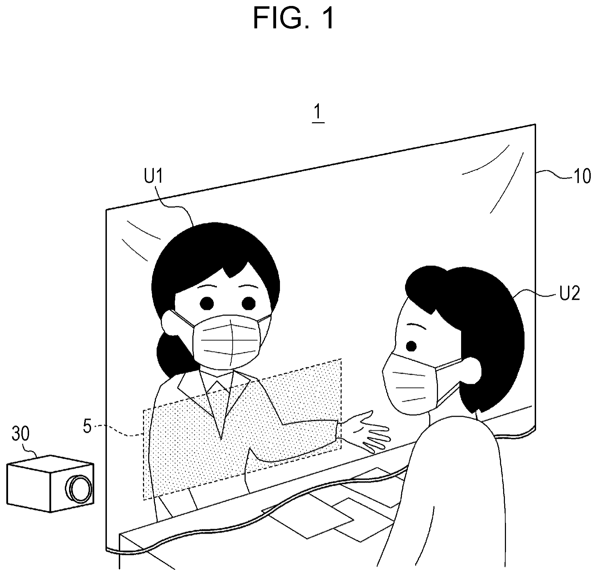

As illustrated in FIG. 1, a projector display system 1 according to an embodiment is a system that supports a conversation between a first user U1 and a second user U2. The second user U2 has a hearing impairment, for example. In addition, the second user U2 is not necessarily limited to a user who has a hearing impairment, and may be, for example, a user who does not have any particular disability. The second user U2 may be, for example, a person who wishes to communicate in a language different from that of the first user U1. As an example, the first user U1 is an employee in charge of a counter at a government, municipal, or public sector office. The second user U2 is, for example, a visitor to a government, municipal, or public sector office. Situations in which the projector display system 1 is used are not limited to those mentioned above. The projector display system 1 may also be used at the counters of financial institutions, medical institutions, and public transportation facilities, at the sales outlets of private businesses, and in conference rooms in offices etc.

In recent years, due to the spread of infectious diseases, vinyl curtains or acrylic panels etc. may be installed between counter staff and customers in situations where counter staff come into contact with customers as a measure against flying droplets. In the projector display system 1, a vinyl curtain or an acrylic panel is used as a base material 10, and a transparent screen 5 is arranged on the base material 10. A projector 30 projects speech content of the first user U1 as characters onto the transparent screen 5. This allows the second user U2, who is positioned opposite the first user U1 across the transparent screen 5, to visually confirm the speech content of the first user U1 even if he or she cannot hear the speech content of the first user U1.

The transparent screen 5 can be disposed at any location on the base material 10. The transparent screen 5 may be disposed at a position that does not obstruct the first user U1 and the second user U2 from seeing each other's faces. For example, the transparent screen 5 may be disposed at a position to which the first user U1 and the second user U2 lower their lines of sight from the horizontal direction.

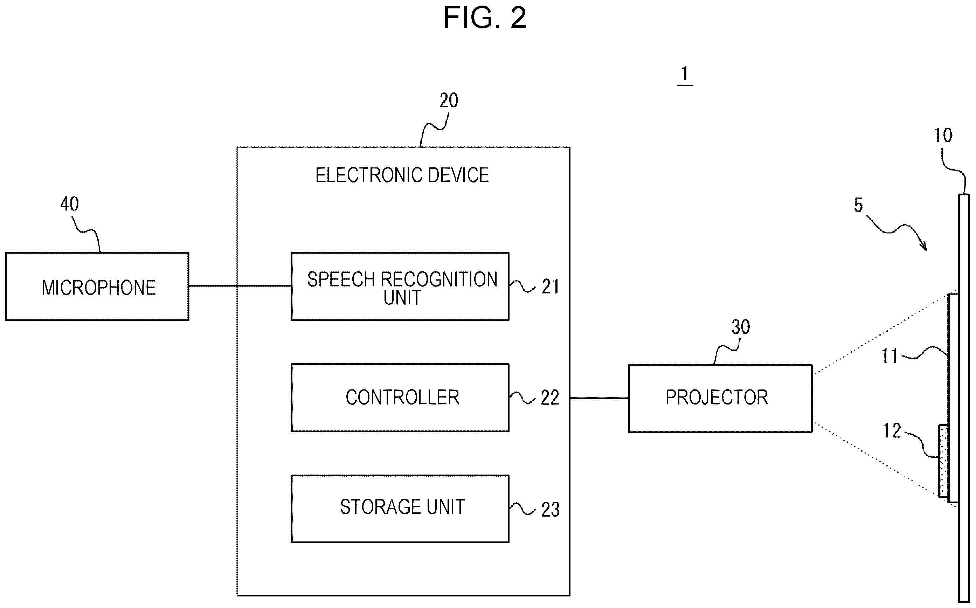

The projector display system 1 includes, for example, an electronic device 20 and a microphone 40 in addition to the transparent screen 5 and the projector 30, as illustrated in FIG. 2.

The transparent screen 5 includes a screen unit 11 and a light-shielding portion 12 disposed on the base material 10.

The screen unit 11 is a film-like, sheet-like, or plate-like member for projector projection that can be attached to the base material 10. In general, the screen unit 11 itself may be referred to as a "transparent screen." The screen unit 11 diffuses part of the light incident from the projector 30 toward the incoming side and the outgoing side. The first user U1 and the second user U2 can recognize an image projected from the projector 30 due to the light diffused by the screen unit 11 entering their fields of vision. The shape of the screen unit 11 may be, for example, rectangular, but is not limited to this shape. The screen unit 11 may have various shapes.

The light-shielding portion 12 at least partially blocks (shields) transmission of the light emitted from the projector 30. The light-shielding portion 12 is, for example, a dichroic film that suppresses light of a specific wavelength. For example, a dichroic film that does not transmit the color red can be used for the light-shielding portion 12. The light-shielding portion 12 can be disposed to overlap part of the screen unit 11. For example, the light-shielding portion 12 is disposed to overlap a surface of the screen unit 11. The shape of the light-shielding portion 12 can be, for example, rectangular, but is not limited this shape. The light-shielding portion 12 can be various shapes.

The microphone 40 is arranged on the side where the first user U1 is located. For example, the microphone 40 may be arranged on a desk in front of the first user U1. The microphone 40 may be attached to a headset worn by the first user U1. The microphone 40 converts the sounds uttered by the first user U1 into an electrical signal and outputs the electrical signal to the electronic device 20.

The electronic device 20 receives the output from the microphone 40, recognizes the speech content of the first user U1, and generates a display object based on the recognized speech content. The electronic device 20 converts the display object into an image signal and causes the projector 30 to display the display object. The display object is, for example, text (a character string). Furthermore, the display object may indicate content (character string) obtained by translating content (character string) in a first language recognized as speech content of the first user U1 into a second language that is different from the first language. The electronic device 20 may be a general-purpose device such as a mobile phone, a smartphone, a tablet terminal, or a personal computer, or may be a dedicated device. The electronic device 20 includes a speech recognition unit 21, a controller 22, and a storage unit 23.

The speech recognition unit 21 performs speech recognition processing based on an audio signal output from the microphone 40. The speech recognition result is output as text data. Various known technologies may be adopted for the speech recognition processing. The speech recognition unit 21 includes a speech recognition engine that performs speech recognition processing using a speech recognition dictionary stored in the storage unit 23. The speech recognition dictionary includes an acoustic model, a language model, and a speech dictionary. The speech recognition unit 21 may include a dedicated or general-purpose processor. The processing of the speech recognition unit 21 may be executed by the same processor as the processor that executes the functions of the controller 22 described below.

The controller 22 controls the entire electronic device 20 and causes the projector 30 to display the text of the speech content of the first user U1 recognized by the speech recognition unit 21 as a display object. The controller 22 can control the display position and display mode of the display object on the transparent screen 5. As described later, the controller 22 can cause the projector 30 to project the text of the speech content of the first user U1 as a first display object DO1 and a second display object DO2. The second display object DO2 is obtained by horizontally reversing the first display object DO1.

The controller 22 includes one or more processors. Such processors include a general-purpose processor that loads a specific program and executes a specific function, and a dedicated processor specialized for specific processing. Dedicated processors include ASICs (application-specific integrated circuits). The processors include PLDs (programmable logic devices). PLDs include FPGA (field-programmable gate arrays). The controller 22 may be either an SoC (system-on-a-chip) or an SiP (system in a package) in which one or more processors work together.

The storage unit 23 is configured to store a program executed by the controller 22, information necessary for processing executed by the controller 22, and information obtained as a result of processing executed by the controller 22. The storage unit 23 may store the above-mentioned speech recognition dictionary. The storage unit 23 may store, for example, a dictionary necessary for kanji conversion of recognized text information. The storage unit 23 may include at least one selected from a group consisting of a semiconductor storage device, a magnetic storage device, and an optical storage device. Semiconductor storage devices may include volatile memories such as a DRAM (dynamic random access memory) and an SRAM (static random access memory), and non-volatile memories such as a ROM (read only memory) and a flash memory. Semiconductor storage devices include an SSD (solid state drive) using a flash memory. Magnetic storage devices include magnetic tapes, floppy disks, and hard disks. Optical storage devices include, for example, CDs (compact discs), DVDs (digital versatile discs), and Blu-rays (registered trademark).

The projector 30 is disposed on the first user U1 side and projects display objects such as text, still images, and moving images onto the transparent screen 5.

### (Example of Display of Projector Display System)

Next, an image displayed on the transparent screen 5 by the projector 30 based on an image signal from the electronic device 20 will be described. In the transparent screen 5, the area on the screen unit 11 is divided into a first display area A1 and a second display area A2. The first display area A1 is an area where the screen unit 11 and the light-shielding portion 12 overlap. The second display area A2 is an area where the screen unit 11 and the light-shielding portion 12 do not overlap. The second display area A2 is used to display the speech content of the first user U1 as text to the second user U2. A display object displayed by the projector 30 in the second display area A2 is called a second display object DO2. The first display area A1 is an area that displays the content of the second display object DO2 displayed to the second user U2 to the first user U1 so that the content can be checked by the first user U1. A display object displayed by the projector 30 in the first display area A1 is called the first display object DO1. The second display object DO2 is a display object obtained by horizontally reversing the first display object DO1.

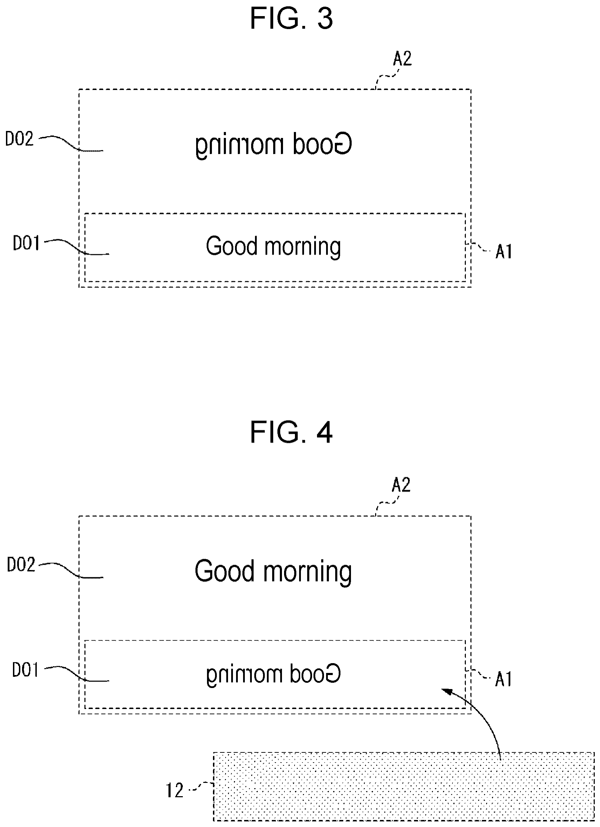

As illustrated in FIG. 3, when the transparent screen 5 is viewed from the first user U1, the first display object DO1 is displayed in the first display area A1. In addition, the second display object DO2 is displayed in the second display area A2. The second display object DO2 is displayed to the first user U1 as mirrored characters. The first display object DO1 is displayed as normal characters. "Mirrored characters" are characters obtained by horizontally reversing normal characters. "Normal characters" are characters that are displayed in a normal manner. A normal character may mean a character having a normal orientation. In the present disclosure, "normal orientation" means a state in which characters, etc. are displayed correctly from left to right from the user's perspective. "Normal orientation" is used in contrast to a state in which characters etc. are horizontally reversed.

On the other hand, when the image projected by the same projector 30 onto the transparent screen 5 is viewed from the second user U2 side, the second display object DO2 is displayed as normal characters as illustrated in FIG. 4. The first display object DO1 would be displayed as mirrored characters if the light-shielding portion 12 were not present. The first display object DO1 consists of unnecessary characters that do not need to be displayed to the second user U2, and since the characters are mirrored characters, the characters may be confusing to the second user U2. However, since the light-shielding portion 12 is disposed on the first display area A1 of the screen unit 11, the first display object DO1 is not displayed to the second user U2.

For example, in the case where the light-shielding portion 12 is a dichroic film that blocks the transmission of light of red wavelengths, the projector 30 projects the first display object DO1 using red light. As a result, the image light of the first display object DO1 is reflected by the light-shielding portion 12 and is viewed by the first user U1. On the other hand, since the image light of the first display object DO1 does not easily pass through the light-shielding portion 12, the image light is difficult for the second user U2 to see. As a result, the first display object DO1, which is in the form of mirrored characters, is difficult for the second user U2 to see. Therefore, the second user U2 is unlikely to be bothered by the first display object DO1. In addition, the images illustrated in FIG. 3 and FIG. 4 are examples of display of the projector display system, and the positions of the first display area A1 and the second display area A2 may be changed as appropriate.

### (Example of Using Viewing Angle Control Film in Light-Shielding Portion)

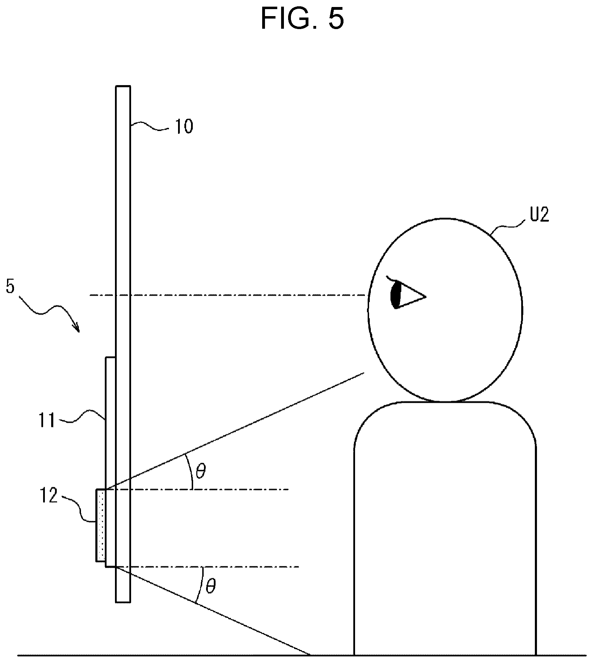

In an embodiment, the light-shielding portion 12 can be a film or member that limits the angle of propagation of transmitted light, rather than a dichroic film. Films that control the propagation direction of transmitted light include viewing angle control films. For example, as illustrated in FIG. 5, the light-shielding portion 12 can be configured to limit the range of propagation of transmitted light to a range from 0° to a predetermined angle θ in the vertical direction with respect to a normal line to the transparent screen 5, and not to allow light to propagate in other directions. The predetermined angle θ can be, for example, 10° to 30°, but is not limited to this range. As a result, the light-shielding portion 12 limits the vertical direction viewing angle to a range of 20. The light-shielding portion 12 can be said to have a blind effect. As illustrated in FIG. 5, when the eyes of the second user U2 are located outside this range, the second user U2 will have difficulty seeing the second display object DO2 projected on the light-shielding portion 12. Therefore, the second user U2 is unlikely to be bothered by the first display object DO1.

### (Arrangement of Transparent Screen and Light-Shielding Portion)

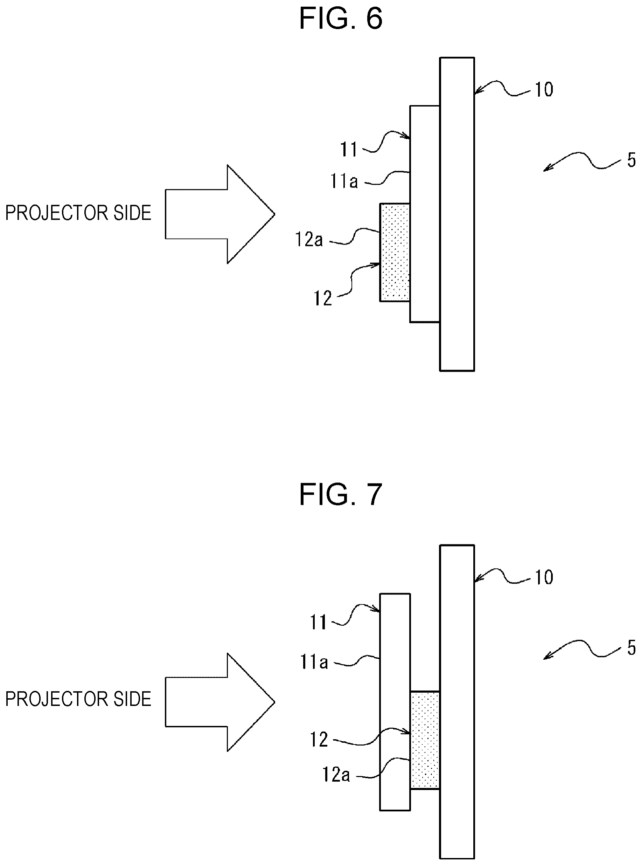

FIGs. 6 to 8 are diagrams illustrating examples of the arrangement of the base material 10, the screen unit 11, and the light-shielding portion 12 in the transparent screen 5. The light-shielding portion 12 may be a film or member having a light shielding function of another type, instead of a dichroic film and a viewing angle control film. The screen unit 11 and the light-shielding portion 12 have projector projection surfaces 11a and 12a, and as long as these surfaces face toward the projector 30 side (i.e., the first user U1 side), the base material 10, the screen unit 11, and the light-shielding portion 12 can be arranged in any order. The projector projection surfaces 11a and 12a are surfaces that are predetermined as the sides onto which light from the projector 30 is to be projected.

In FIG. 6, the transparent screen 5 is configured by arranging the screen unit 11 on the projector 30 side of the base material 10, and arranging the light-shielding portion 12 on the projector 30 side of the screen unit 11.

In FIG. 7, the transparent screen 5 is configured by arranging the light-shielding portion 12 on the projector 30 side of the base material 10, and further arranging the screen unit 11 on the projector 30 side of the base material 10 and the light-shielding portion 12.

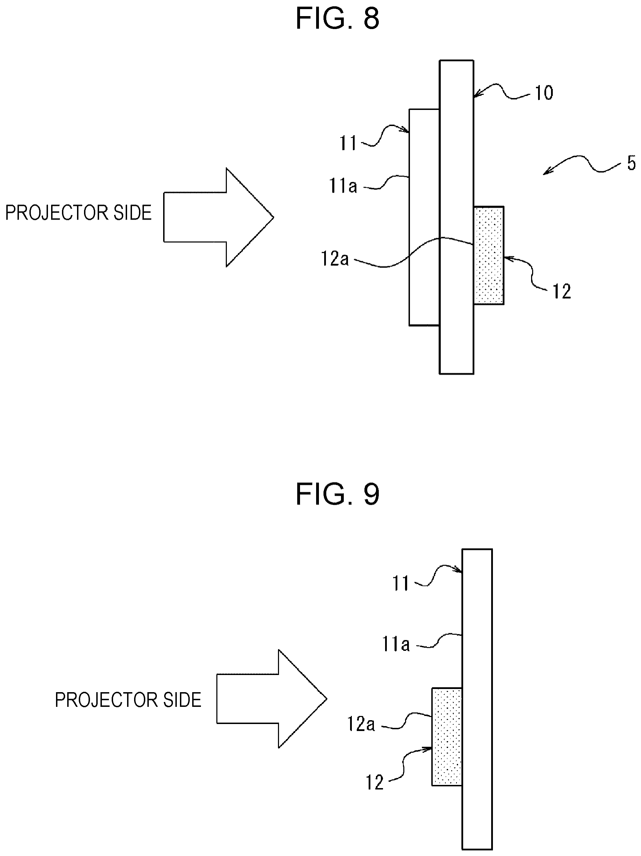

In FIG. 8, the transparent screen 5 includes the screen unit 11 arranged on the projector 30 side of the base material 10, and the light-shielding portion 12 arranged on the second user U2 side of the base material 10.

In FIGs. 6 to 8, an arrangement in which the order of the base material 10, the screen unit 11, and the light-shielding portion 12 is reversed in the horizontal direction is also possible. A transparent adhesive can be used to attach the base material 10, the screen unit 11, and the light-shielding portion 12 to each other. Alternatively, the base material 10, the screen unit 11, and the light-shielding portion 12 can be attached to each other by charging any one of the surfaces to be attached with static electricity. When static electricity is used for attachment, there is an advantage that the screen unit 11 and the light-shielding portion 12 can be easily removed and/or moved.

In addition, the transparent screen 5 can be configured such that the light-shielding portion 12 is attached to the screen unit 11 without the use of the base material 10 such as an acrylic plate or a vinyl sheet, as illustrated in FIG. 9. In this case, the screen unit 11 doubles as the base material 10.

### (Other Examples of Configurations of Transparent Screen and Light-Shielding Portion)

Various configurations other than the above-described example configurations can be adopted for the transparent screen 5 and/or the light-shielding portion 12 according to an embodiment. For example, the light-shielding portion 12 may be configured so that the position thereof relative to the screen unit 11 can be changed or so that the light-shielding portion 12 can be attached and detached. The light-shielding portion 12 may not be attached to the base material 10 and the screen unit 11, and may instead be placed opposite any position on the screen unit 11 and supported by something else. The light-shielding portion 12 may be attached to a member such as a roll screen. Here, the roll screen may be a transparent sheet wound in a roll that is hung from a ceiling or the like so that the screen can be pulled down and rolled up.

### (Display Mode of Second Display Object)

The projector display system 1 can display the second display object DO2 based on text information obtained by speech recognition of the content spoken by the first user U1 in various modes. The display mode of the second display object DO2 is controlled by the electronic device 20. For example, a specific word may be registered as an important word in the storage unit 23 of the electronic device 20. When the speech content of the first user U1 obtained as a result of the speech recognition includes an important word registered in the storage unit 23, the controller 22 of the electronic device 20 can change the word in the second display object DO2 displayed by the projector 30 to be displayed in an emphasized manner. Examples of displayed in an emphasized manner include changing the color of the characters to, for example, red, changing the font of the characters, and changing the thickness of the characters.

The storage unit 23 of the electronic device 20 may store a specific word to be converted into a specific illustration. When the speech content of the first user U1 obtained as a result of the speech recognition includes a specific word stored in the storage unit 23, the controller 22 of the electronic device 20 may convert the word in the second display object DO2 to be displayed by the projector 30 into an illustration. Converting the specific word into an illustration allows the second user U2 to easily and intuitively understand the second display object DO2.

There may be multiple first users U1. The speech recognition unit 21 or the controller 22 of the electronic device 20 may be configured to identify the first user U1 who is speaking from among multiple people based on the speaker's voice pitch, voiceprint characteristics, and other voice characteristics of the speaker. The controller 22 may change the display mode of the text in the second display object DO2 in accordance with the identified speaker. Changing the display mode includes at least one of changing the display color or changing the display position. This allows the second user U2 to easily know who has spoken the speech content in the second display object DO2.

Furthermore, the electronic device 20 may have a translation function for translating text into a foreign language. In this case, the controller 22 may include a translation engine. The storage unit 23 stores dictionary information etc. required for performing translation. The controller 22 translates the speech content of the first user U1 obtained as a result of the speech recognition into a foreign language, and sets the obtained text information as the second display object DO2. This allows the projector display system 1 to display the speech content of the first user U1 in a foreign language that the second user U2 can understand, even if the second user U2 is a foreigner.

### (Use of Speech Recognition Processing Etc. Using External Cloud Server)

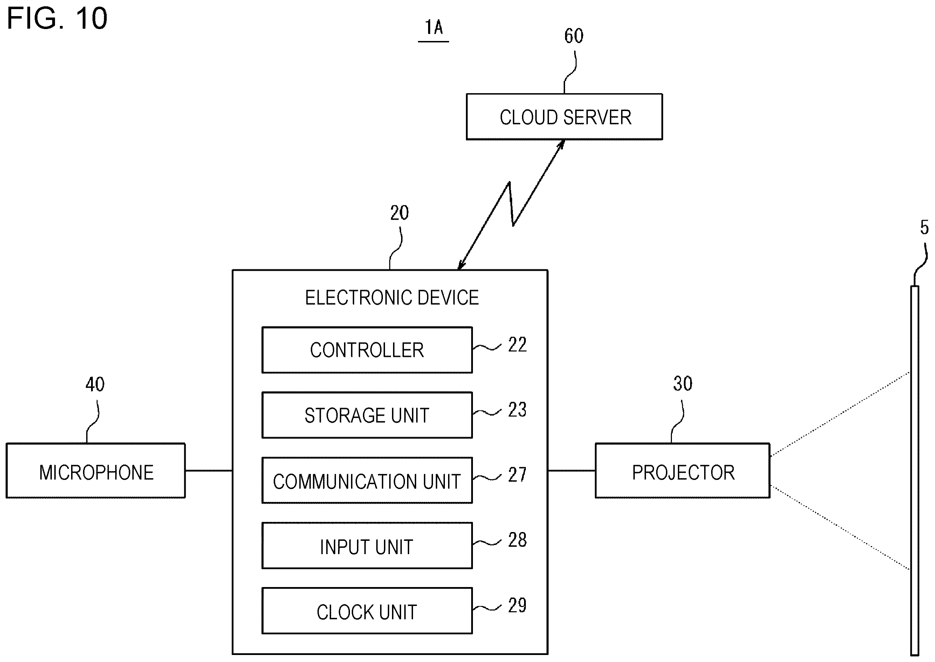

Hereinafter, an embodiment in which an external cloud server 60 (see FIG. 10) that provides speech recognition processing is used will be described. A "cloud server" is a server that can be accessed via a network such as the Internet. An example of the cloud server 60 in the following embodiment is a server that executes a speech recognition service provided by a third party as a paid service. Use of the cloud server 60 is assumed to be charged on a pay-per-use basis according to the connection time or the data amount of a transmitted audio signal. The projector display system is configured to transmit an audio signal to the cloud server 60 when a predetermined condition is satisfied.

In addition, in an embodiment, the external cloud server 60 may provide a translation function for translating text into a foreign language instead of or in addition to speech recognition processing. In this case, the cloud server 60 may include a translation engine. As a result of the cloud server 60 providing the translation function, the electronic device 20 can receive the result of the text being translated into a foreign language from the cloud server 60 even if the electronic device 20 does not have a function such as a translation engine.

### (Example Configuration of System That Communicates With Cloud Server)

A projector display system 1A according to an embodiment of the present disclosure will be described with reference to FIG. 10. In FIG. 10, components that are the same as or similar to those included in the projector display system 1 described above are denoted by the same reference symbols as those included in the projector display system 1.

The projector display system 1A includes a transparent screen 5, an electronic device 20, a projector 30, and a microphone 40. The transparent screen 5 is illustrated in a simplified manner in FIG. 10, but includes a screen unit 11 and a light-shielding portion 12, similarly to the transparent screen 5 illustrated in FIG. 2.

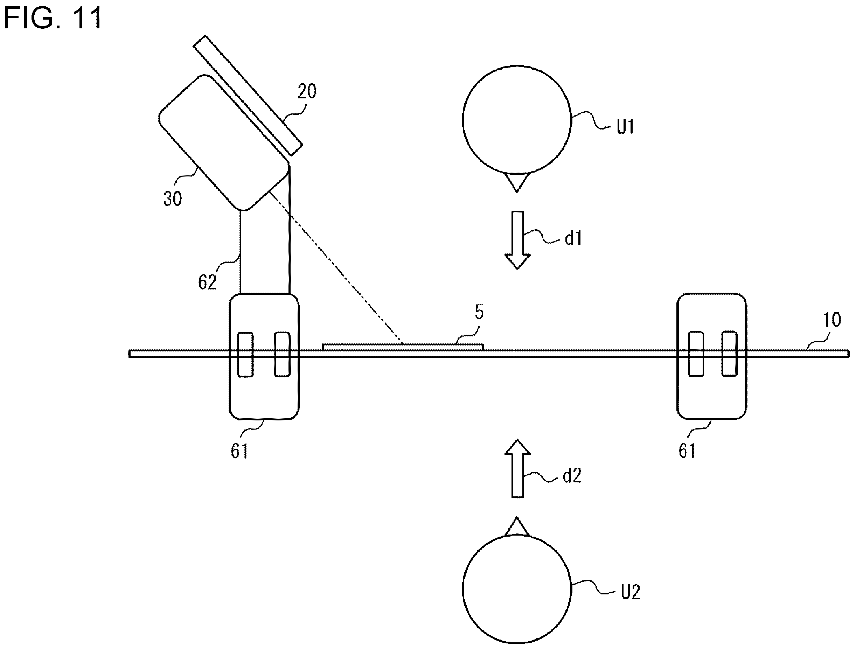

In an embodiment, the transparent screen 5, the electronic device 20, and the projector 30 may be arranged as illustrated in the top view in FIG. 11. As illustrated in FIG. 11, the first user U1 faces the second user U2 in the direction of an arrow d1, that is, across the transparent screen 5. In addition, the second user U2 faces the first user U1 in the direction of an arrow d2, that is, across the transparent screen 5. In short, the first user U1 and the second user U2 face each other across the transparent screen 5.

The transparent screen 5 may be formed in an integrated manner with a transparent base material 10, such as an acrylic plate. The transparent screen 5 may be provided across the entire surface or part of one surface of the base material. The transparent screen 5 is supported by one or more stands 61 and is arranged to stand approximately vertically upright on a desk located between the first user U1 and the second user U2. The projector 30 is fixed to a positioning member 62 extending from one of the stands 61. The positioning member 62 fixes the distance and the orientation of the projector 30 with respect to the transparent screen 5. In the illustrated example, the electronic device 20 is, for example, a smartphone or a portable information terminal. The microphone 40 may be built into the electronic device 20. The microphone 40 may be a separate device from the electronic device 20 and electrically connected to the electronic device 20.

The electronic device 20 includes a controller 22 and a storage unit 23, similarly to the electronic device 20 of the projector display system 1 of FIG. 2, but does not need to include a speech recognition unit 21. The electronic device 20 further includes a communication unit 27. The electronic device 20 may further include an input unit 28 and/or a clock unit 29.

Returning to FIG. 10, the description of the projector display system 1A will continue. The controller 22 includes one or more processors similarly to the controller 22 of the projector display system 1. The controller 22 is configured to control the entire electronic device 20 and to transmit an audio signal acquired by the microphone 40 to the cloud server 60 via the communication unit 27. The controller 22 is configured to acquire text information (character information) converted from the audio signal by the cloud server 60 via the communication unit 27. The controller 22 may be configured to acquire text information (character information) translated into a foreign language by the cloud server 60 via the communication unit 27. The controller 22 causes the projector 30 to display the received text information as a display object, as in the case of the projector display system 1.

The storage unit 23 stores information necessary for processing executed by the controller 22, information obtained as a result of processing executed by the controller 22, and so on, as in the case of the projector display system 1. The controller 22 includes a storage device such as a semiconductor memory, as in the case of the projector display system 1.

The communication unit 27 communicates with devices outside the electronic device 20 by wireless or wired communication means. The communication unit 27 may realize communication using various communication schemes, such as a wired LAN (local area network) standard, a wireless LAN standard such as Wifi, and a mobile communication standard such as 4G (4th Generation) and 5G (5th Generation). The communication unit 27 transmits audio signals to the cloud server 60 and receives text data from the cloud server 60.

The input unit 28 accepts inputs and operations from the first user U1. The input unit 28 may include a switch provided in the electronic device 20 or a switch electrically connected to the electronic device 20. A switch that is part of the input unit 28 may be attached to the microphone 40. The input unit 28 may be linked to a switch of the microphone 40. The input unit 28 may be, for example, a touch panel provided in the electronic device 20.

The clock unit 29 is configured to measure time. The clock unit 29 may be realized by, for example, an RTC (real-time clock) built into the electronic device 20. The clock unit 29 may be provided as one function of the controller 22. The clock unit 29 can function as one or more timers capable of measuring elapsed time starting from one or more points in time.

Next, technical problems solved by the projector display system 1 according to an embodiment of the present disclosure will be described. Below, an example will be described in which the first user U1 has Japanese as a native language, and the second user US has English as a native language.

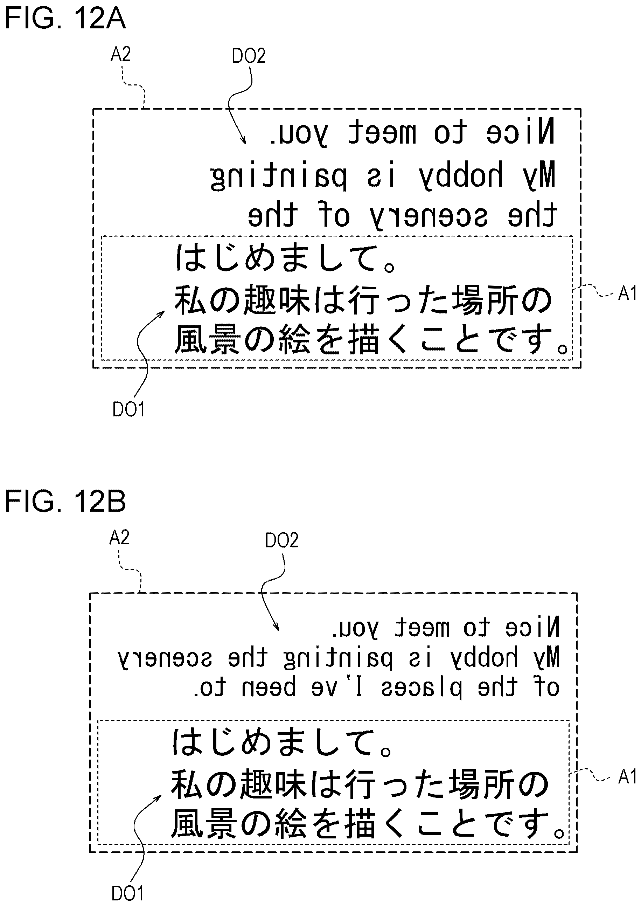

The projector display system 1 acquires Japanese speech data of the first user U1 via, for example, the microphone 40, and displays the speech data as characters in a predetermined area (first display area A1) of the screen unit 11. As a result, for example, as illustrated in FIG. 12A, the speech content of the first user U1 is displayed as Japanese characters (first display object DO1) in the first display area A1. FIG. 12A illustrates the display shown on the screen unit 11 as seen from the first user U1 side. The first user U1 can check the result of the speech recognition of his/her speech content by visually checking the display (first display object DO1) in the first display area A1.

The projector display system 1 translates the speech content of the first user U1 into English so that the speech content of the first user U1 can be understood by the second user U2, and furthermore, displays the translated characters in a predetermined area (second display area A2) of the screen unit 11 in a horizontally reversed manner. As a result, as illustrated in FIG. 12A, for example, the speech content of the first user U1 (first display object DO1) is translated into English and displayed as English characters (second display object DO2) in the second display area A2. As described above, FIG. 12A illustrates the display shown on the screen unit 11 as viewed from the first user U1 side. When viewed from the first user U1 side, the English characters (second display object DO2) displayed in the second display area A2 of the screen unit 11 are horizontally reversed. Therefore, when viewed from the second user U2 side, the English characters (second display object DO2) displayed in the second display area A2 of the screen unit 11 are displayed as characters having a normal orientation. Therefore, in the example illustrated in FIG. 12A, the second user U2 can confirm in English by visually checking the display (second display object DO2) in the second display area A2.

However, unless the display amount of characters displayed in the first display area A1 and the display amount of characters displayed in the second display area A2 are appropriately controlled, the information displayed in each display area will not appropriately correspond to each other. For example, in the example illustrated in FIG. 12A, even if all of the Japanese characters (first display object DO1) displayed in the first display area A1 are translated into English and displayed in the second display area A2, the space in the second display area A2 is insufficient. For this reason, the content of the first display object DO1 does not correspond to the second display object DO2. That is, in the example illustrated in FIG. 12A, the second display object DO2 in which the speech content of the first user U1, who is the speaker, is translated into English is cut off, and not all of the content of the first display object DO1 is displayed. Therefore, since the characters of each language are not displayed appropriately in each display area, communication between the interlocutors may not be smooth. In other words, if all of the Japanese characters (first display object DO1) displayed in the first display area A1 are not correctly translated into English and displayed in the second display area A2, the speech content of the first user U1 may not be correctly conveyed to the second user U2.

According to the projector display system 1 of an embodiment, the display amount of the characters displayed in the first display area A1 and the display amount of the characters displayed in the second display area A2 are appropriately controlled in order that the information displayed in the display areas appropriately correspond to each other. For example, as illustrated in FIG. 12B, even if all of the Japanese characters (first display object DO1) displayed in the first display area A1 are translated into English and displayed in the second display area A2, the contents of the first display object DO1 will correctly correspond to the second display object DO2. In the example illustrated in FIG. 12B, the second display object DO2 in which the speech content of the first user U1, who is the speaker, is translated into English is not cut off, and all of the content of the first display object DO1 is displayed. According to the projector display system 1 of an embodiment, the characters of each language are controlled so as to be appropriately displayed in the corresponding display area. That is, all of the Japanese characters (first display object DO1) displayed in the first display area A1 are correctly translated into English and displayed in the second display area A2, and therefore the speech content of the first user U1 is correctly conveyed to the second user U2. Therefore, according to the projector display system 1 of an embodiment, communication between the interlocutors is smooth.

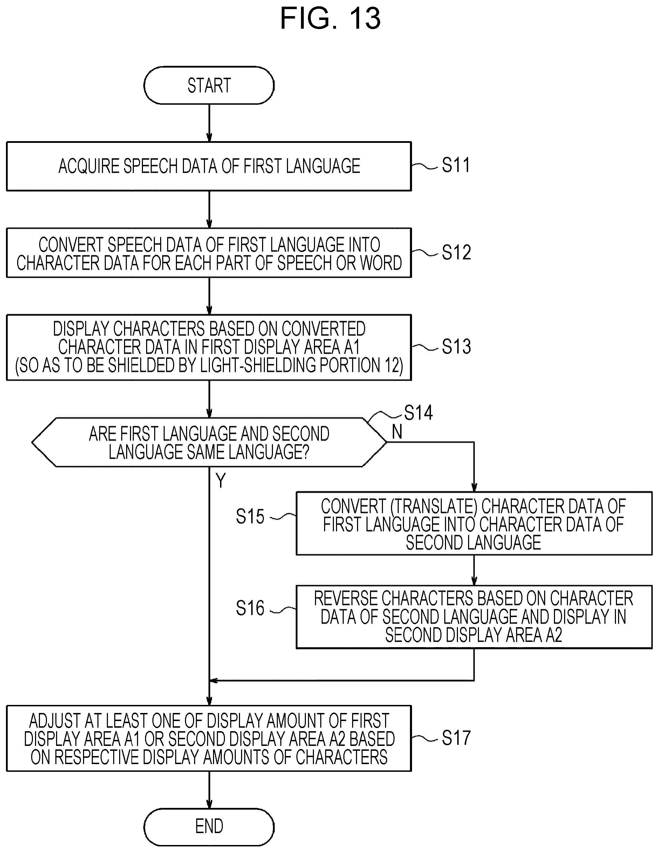

Hereafter, the above-mentioned operation of the projector display system 1 will be described. FIG. 13 is a flowchart for explaining operation of the projector display system 1.

In the following description, the language used by the first user U1 (speaker) will also be referred to as a first language. Furthermore, the language used by the second user U2 (listener) will also be referred to as a second language. As in the above example, the language used by the first user U1 (speaker) is Japanese. In other words, the first language is Japanese. On the other hand, the language used by the second user U2 (listener) is English. That is, the second language is English. The first language and the second language may be set, for example, by the first user U1 and/or the second user U2 at the start of or before the start of operation of the projector display system 1, or may be set at any appropriate timing. In an example, the first language may be automatically determined through, for example, speech recognition of the language of the first user.

When the operation illustrated in FIG. 13 starts, the projector display system 1 acquires speech data of the first language from the first user U1 (Step S11). After that, for example, the controller 22 of the electronic device 20 may perform control related to the operation illustrated in FIG. 13. In Step S11, the controller 22 may acquire speech data of the first language from the first user U1 detected by the microphone 40, for example.

Once the speech data of the first language has been acquired in Step S11, the controller 22 of the projector display system 1 converts the speech data of the first language into character data for each part of speech or word of the first language (Step S12). As described above, the controller 22 may cause the cloud server 60 to perform the operation of Step S11. In this case, the controller 22 transmits the speech data of the first language to the cloud server 60 via the communication unit 27. Then, the cloud server 60 transmits the result of converting the speech data of the first language into character data for each part of speech or word of the first language to the electronic device 20. In this case, the electronic device 20 may receive the character data from the cloud server 60 via the communication unit 27. Similarly, at least a part of the operation performed by the controller 22 may be performed by the cloud server 60.

Once the speech data has been converted into character data in Step S12, the controller 22 displays characters based on the character data in the first display area A1 of the screen unit 11 (Step S13). For example, in Step S13, the controller 22 may display Japanese characters as the display object DO1 in the first display area A1 as illustrated in FIG. 12A or 12B. In Step S12, the controller 22 may display the characters shown in the first display area A1 so as to be shielded by the light-shielding portion 12. For example, as illustrated in FIG. 12A or 12B, the Japanese characters displayed as the display object DO1 in the first display area A1 do not need to be visible to the second user U2. Therefore, by displaying the Japanese characters shown in the first display area A1 so as to be shielded by the light-shielding portion 12, the Japanese characters shown in the first display area A1 become invisible or difficult for the second user US to see.

Next, the controller 22 determines whether the first language and the second language are the same language (Step S14). As described above, here, the case where the first language (Japanese) and the second language (English) are different languages (No in Step S14) will be described. When the first language and the second language are different languages, the controller 22 converts the character data of the first language into character data of the second language (Step S15). That is, in Step S15, the controller 22 translates the characters of the first language into characters of the second language. As described above, the cloud server 60 may convert the character data of the first language into character data of the second language instead of the controller 22.

Once the character data of the first language has been converted into character data of the second language in Step S15, the controller 22 horizontally reverses the character data of the second language and then displays the resulting character data in the second display area A2 of the screen unit 11 (Step S16). For example, at the time of Step S16, the controller 22 displays English characters as the display object DO2 in the second display area A2 as illustrated in FIG. 12A or FIG. 12B.

After Step S16, the controller 22 adjusts at least one of the first display amount or the second display amount based on the first display amount in which the characters of the first language are displayed in the first display area A1 and the second display amount in which the characters of the second language are displayed in the second display area A2 (Step S17). The first display amount may be a display amount (amount of characters) in which the characters of the first language are displayed in the first display area A1. In addition, the second display amount may be the display amount (amount of characters) in which the characters of the second language are displayed in the second display area A2.

In Step S17, the controller 22 may determine whether the content of the first display amount corresponds to the content of the second display amount. If the content of the first display amount corresponds to the content of the second display amount (i.e., if the content of the characters of the first language is all displayed as the content of the characters of the second language), the controller 22 does not need to adjust the first display amount or the second display amount. On the other hand, when the content of the first display amount does not correspond to the content of the second display amount (i.e., the content of the characters of the first language is not entirely displayed as the content of the characters of the second language), the controller 22 may adjust at least one of the first display amount or the second display amount.

For example, the controller 22 may adjust the second display amount by changing at least one selected from a group consisting of the size of the characters, the spacing between the characters, and the line spacing of the characters of the second language. That is, as illustrated in FIG. 12A, when the area of the second display area A2 for displaying the characters (English) of the second display amount into which the characters (Japanese) of the first display amount are converted is insufficient, the controller 22 may adjust the size etc. of the display object DO2 displayed in the second display area A2. The controller 22 may adjust the size etc. of the display object DO2 displayed in the second display area A2, etc., so that the content of the display object DO2 displayed in the second display area A2 corresponds to the content of the display object DO1 displayed in the first display area A1, as illustrated in FIG. 12B.

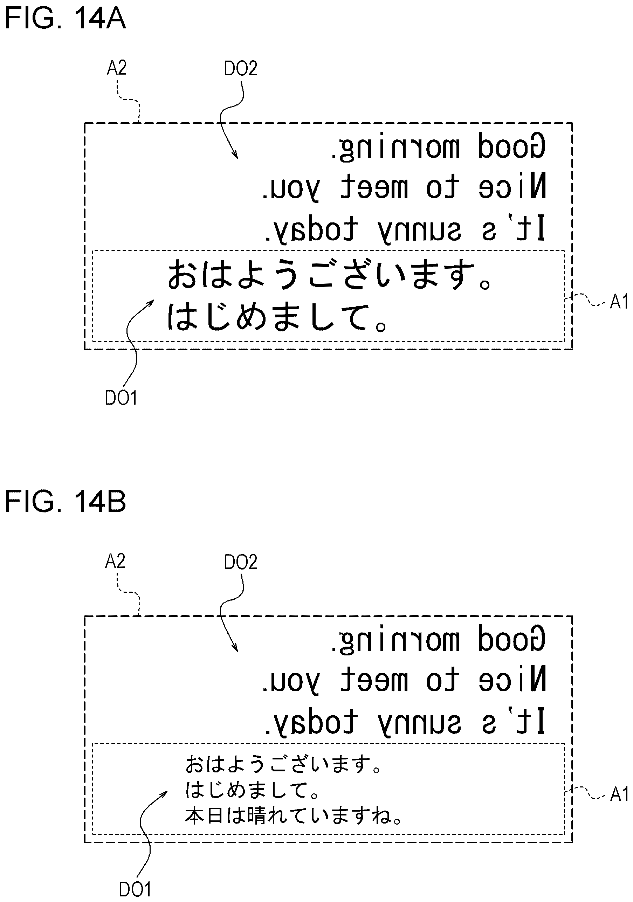

The controller 22 may adjust the first display amount by changing at least one selected from a group consisting of the size of the characters, the spacing between characters, and the line spacing of characters of the first language. That is, as illustrated in FIG. 14A, when the area of the first display area A1 for displaying the characters (Japanese) of the first display amount before being converted into the characters (English) of the second display amount is insufficient, the controller 22 may adjust the size etc. of the display object DO1 displayed in the first display area A1. The controller 22 may adjust the size etc. of the display object DO1 displayed in the first display area A1 so that the content of the display object DO1 displayed in the first display area A1 corresponds to the content of the display object DO2 displayed in the second display area A2, as illustrated in FIG. 14B.

As described above, the electronic device 20 according to an embodiment displays characters on a display (screen unit 11) including the first display area A1 and the second display area A2. Furthermore, the program according to an embodiment may cause the electronic device 20 to execute the following steps. For example, the above-described program may cause the electronic device 20 to execute a step of displaying characters of a first language (language of the speaker) in the first display area A1 (Step S13) and a step of displaying characters of a second language (language of the listener) in the second display area A2 (Step S16). The above-described program may also cause the electronic device 20 to execute a step of displaying either the characters of the first language or the characters of the second language in a horizontally reversed manner (Step S16). The above-described program may also cause the electronic device 20 to execute a step of adjusting at least one of the first display amount or the second display amount (Step S17). Here, the step of adjusting at least one of the first display amount or the second display amount may be executed based on the first display amount in which the characters of the first language are displayed in the first display area A1 and the second display amount in which the characters of the second language are displayed in the second display area A2.

In addition, when the content of the first display amount does not correspond to the content of the second display amount, the program according to an embodiment may cause the electronic device 20 to execute a step of adjusting at least one of the first display amount or the second display amount (Step S17). In this case, the program according to an embodiment may cause the electronic device 20 to execute a step of adjusting at least one of the first display amount or the second display amount by changing the size of at least one of the characters of the first language or the characters of the second language. In this case, the program may cause the electronic device 20 to execute a step of adjusting at least one of the first display amount or the second display amount by changing at least one of the character spacing or the line spacing of at least one of the characters of the first language or the characters of the second language.

In addition, the first display area A1 of the display (screen unit 11) in which the electronic device 20 displays characters may include the light-shielding portion 12 that at least partially blocks the transmission of light. In this case, the program according to an embodiment may cause the electronic device 20 to execute a step of displaying the characters of the first language in the first display area A1 so that the characters are shielded by the light-shielding portion 12.

At least part of the above-described control and processing may be executed by the projector display system 1 instead of or together with the electronic device 20, or may be executed by the cloud server 60.

According to the program of an embodiment, the display amount of characters displayed in the first display area A1 and the display amount of characters displayed in the second display area A2 are appropriately controlled, so that the information displayed in the display areas appropriately correspond to each other. In addition, according to the projector display system 1 of an embodiment, the characters in each language are controlled to be appropriately displayed in the corresponding display area. According to the projector display system 1 of an embodiment, the speech content of the first user U1 is correctly conveyed to the second user U2. Therefore, according to the projector display system 1 of an embodiment, communication between the interlocutors is smooth.

In the above description, the case where the first language (Japanese) and the second language (English) are different languages (No in Step S14 illustrated in FIG. 13) has been described. Next, for example, the case where the first language and the second language are the same language (for example, both are Japanese) will be described. In this case, since the first display amount and the second display amount are basically the same, for example, provided that the first display area A1 and the second display area A2 are set as display areas of approximately the same area, there is no need to adjust the display amount in each display area. In such a case, (Step S17 illustrated in FIG. 13) may be omitted. On the other hand, for example, if the first display area A1 and the second display area A2 are set as display areas of different areas, adjustment of the display amount in each display area may be necessary even if the first display amount and the second display amount are the same. In such a case, as illustrated in FIG. 13, if the processing proceeds to Yes in Step S14, the processing of Step S17 may be executed.

Furthermore, for example, if the first language and the second language are the same language (for example, both are Japanese), the characters displayed in the first display area A1 and the characters displayed in the second display area A2 are desirably displayed with a relatively short time lag therebetween. The longer the time from when the characters are displayed in the first display area A1 to when the characters are displayed in the second display area A2, the greater the risk that communication between the interlocutors will not be smooth.

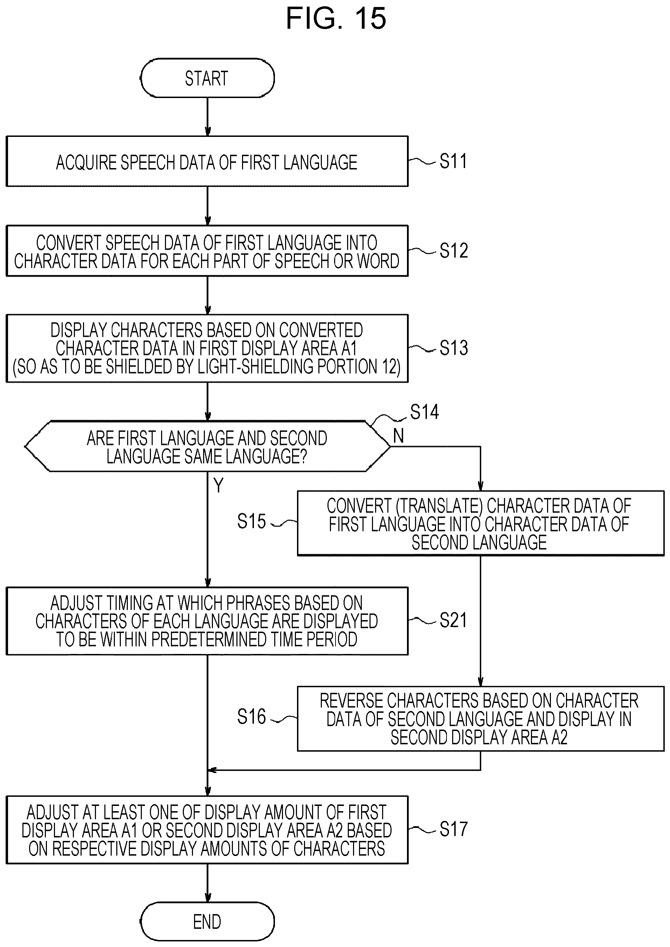

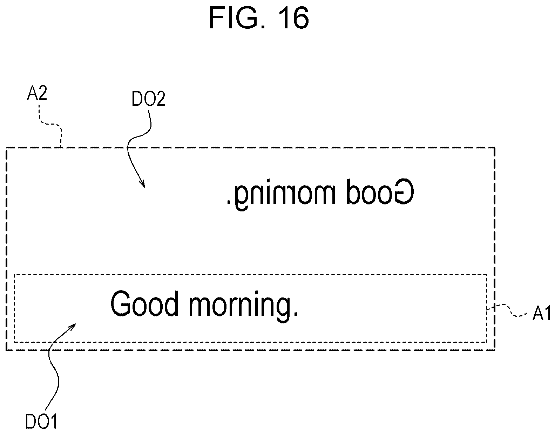

Therefore, in such a case, the processing of Step S21 may be executed by proceeding to Yes in Step S14 illustrated in FIG. 15. In Step S21, the controller 22 may adjust the timings at which phrases made up of the characters of the first language and the second language are displayed so as to be within a predetermined time. Here, within a predetermined time may be such that the time from when a phrase made up of the characters of the first language is displayed to when a phrase made up of the characters of the second language is displayed is within 0.2 seconds. In addition, the phrase made up of the characters of the second language may be displayed almost simultaneously or completely simultaneously with the phrase made up of the characters of the first language. By performing such control, for example, as illustrated in FIG. 16, the phrase (DO1) made up of the characters of the first language (Japanese) is displayed in the first display area A1, and then the phrase (DO2) made up of the characters of the second language (Japanese) is displayed in the second display area A2 immediately afterwards. Therefore, according to the projector display system 1 of an embodiment, communication between the interlocutors is smooth.

In this way, when the first language and the second language are the same language (for example, both are Japanese), the following may be performed. That is, in this case, the program according to an embodiment may cause the electronic device 20 to execute a step of adjusting the timings at which a phrase made up of the characters of the first language and a phrase made up of the characters of the second language are displayed on the display (screen unit 11) to be within a predetermined time.

In addition, when the first language (for example, Japanese) and the second language (for example, English) are different languages, while the first language is being subjected to speech recognition or while the first language is being translated into the second language, a display that is not appropriate for the second language may be displayed. In particular, while Japanese or the like is being subjected to speech recognition, a recognition result that is different from that after the sentence has been confirmed may be displayed in an intermediate stage until the sentence is confirmed. In addition, while Japanese or the like is being translated into English or the like, a translation result that is different from that after the sentence has been confirmed may be displayed in an intermediate stage until the sentence is confirmed. If the characters of the second language are displayed in the second display area A2 based on such a processing result, the second user U2 may become confused. In such a case, communication between the interlocutors may not be smooth.

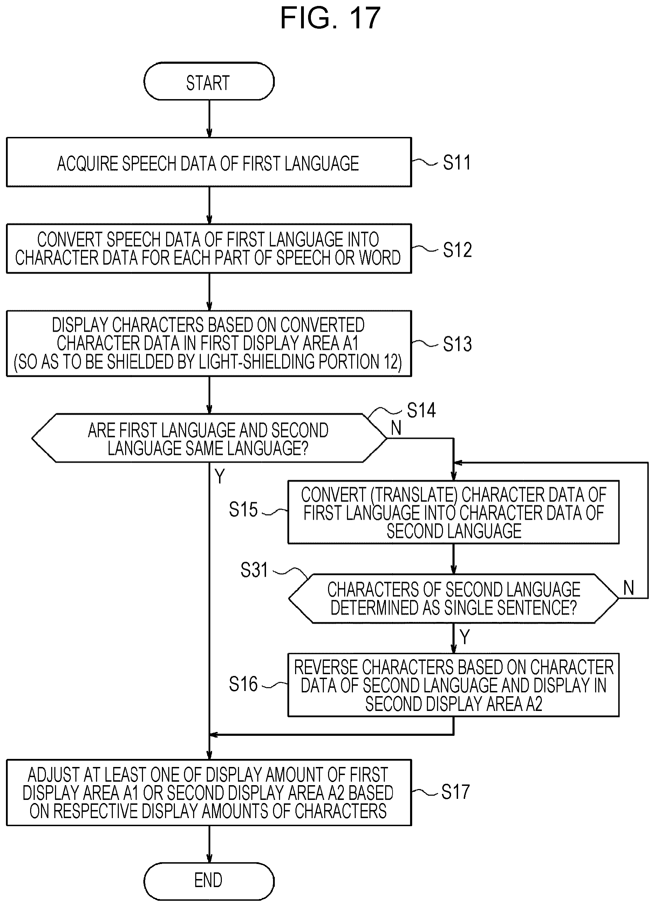

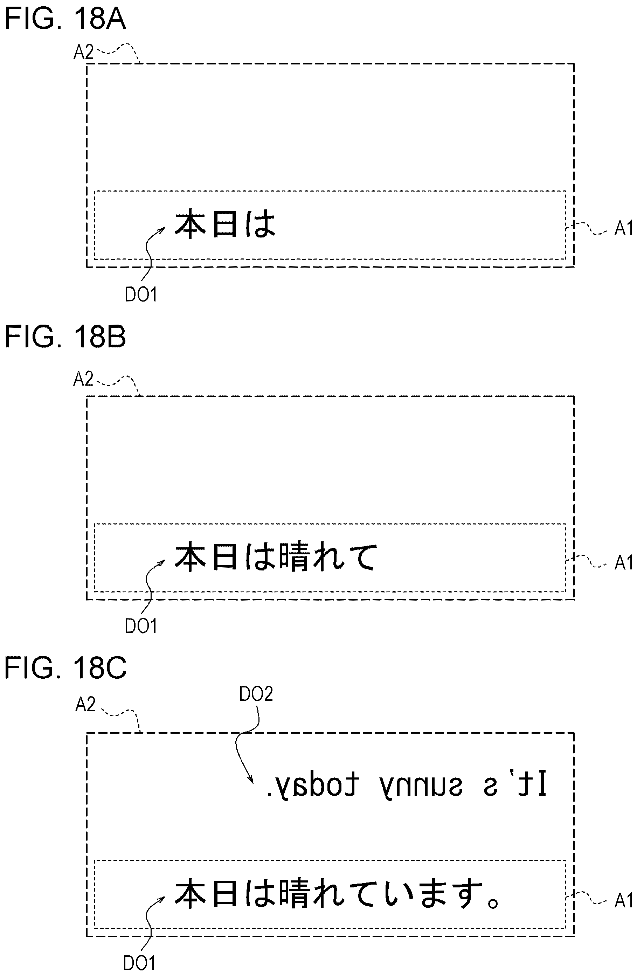

Therefore, in such a case, the processing of Step S31 may be executed after Step S15 illustrated in FIG. 17. In Step S21, the controller 22 may determine whether the characters of the second language have been confirmed as a sentence. If the characters of the second language have not been confirmed as a sentence, the controller 22 may return to Step S15 and continue the processing related to translation (i.e., not display the characters in the second display area). On the other hand, if the characters of the second language have been confirmed as a sentence, the controller 22 may proceed to Step S16 and continue the processing (display the characters in the second display area). By performing such control, for example, as illustrated in FIG. 18A and FIG. 18B, the translation result is not displayed in the second display area A2 until the characters (DO1) of the first language (Japanese) have been confirmed as a sentence. On the other hand, as illustrated in FIG. 18C, for example, once the characters (DO1) of the first language (Japanese) have been confirmed as a sentence, the translation result is displayed in the second display area A2 (DO2). Therefore, according to the projector display system 1 of an embodiment, communication between the interlocutors is smooth.

Thus, when the first language (for example, Japanese) and the second language (for example, English) are different languages, the following may be performed. That is, in this case, the program according to an embodiment may cause the electronic device 20 to execute a step of displaying the characters of the second language as a translation of the characters of the first language, and a step of displaying the characters of the second language based on the characters of the second language being confirmed as a sentence. In addition, in this case, the program according to an embodiment may cause the electronic device 20 to execute a step of displaying the characters of the second language as a translation of the characters of the first language, and a step of not displaying the characters of the second language until the characters of the second language have been confirmed as a sentence.

In addition, for example, after the conversation between the first user U1 and the second user U2 ends, the second user U2 may be replaced by a third user U3, for example, and a conversation between the first user U1 and the third user U3 may begin. For example, let us assume that the language used by the second user U2 is English and the language used by the third user U3 is French. If the display of the language used by the second user U2 is still present in the second display area A2 at the time when the conversation between the first user U1 and the third user U3 begins, the third user U3 may become confused.

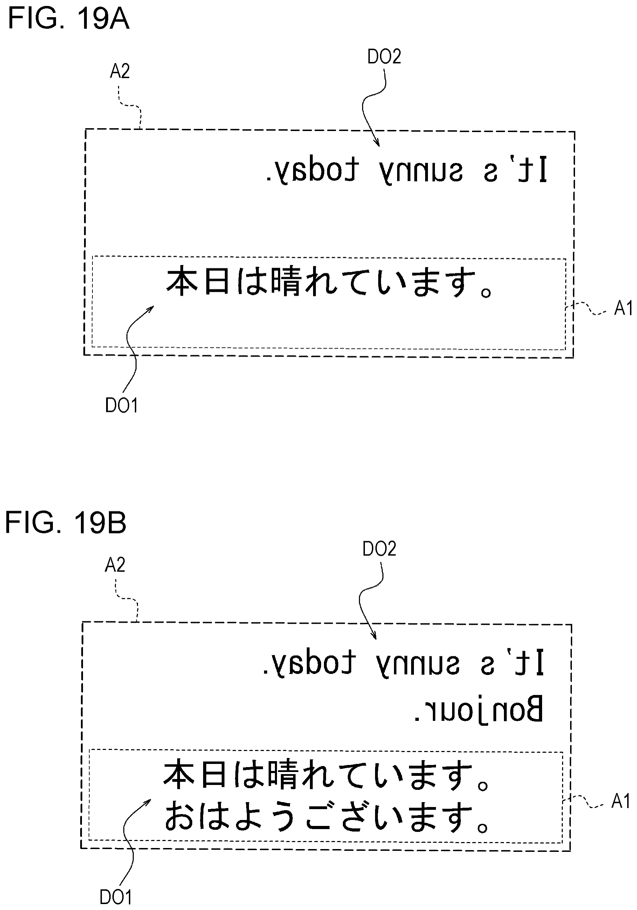

Specifically, let us assume that characters such as those illustrated in FIG. 19A are displayed at the time when the conversation between the first user U1 and the second user U2 ends. As illustrated in FIG. 19A, Japanese characters (DO1), which are characters of the language used by the first user U1, are displayed in the first display area A1, and English characters (DO2), which are characters of the language used by the second user U2, are displayed in the second display area A2. In such a situation, let us assume that the conversation between the first user U1 and the second user U2 ends, the second user U2 and the third user U3 switch roles, and a conversation between the first user U1 and the third user U3 starts. In this case, as illustrated in FIG. 19B, Japanese characters (DO1), which are characters of the language used by the first user U1, are displayed in the first display area A1. On the other hand, as illustrated in FIG. 19B, French characters, which are characters of the language used by the third user U3, are displayed in the second display area A2 (DO2), while English characters, which are characters of the language used by the second user U2, are still present. In such a case, communication between the interlocutors may not be smooth.

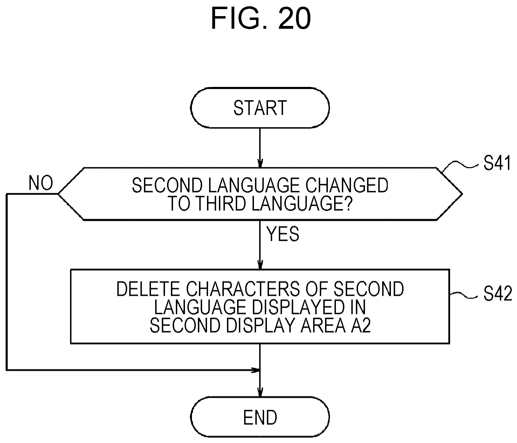

Therefore, in such a case, the operation illustrated in FIG. 20 may be executed. As illustrated in FIG. 20, the controller 22 determines whether the second language (e.g., English) has been changed to a third language (e.g., French) different from the second language, for example, due to the third user U3 switching roles with the second user U2 (Step S41). If the second language has not been changed to a third language, the controller 22 may end the processing illustrated in FIG. 20. On the other hand, if the second language has been changed to a third language, the controller 22 erases (or deletes) the characters of the second language displayed in the second display area A2 (Step S42).

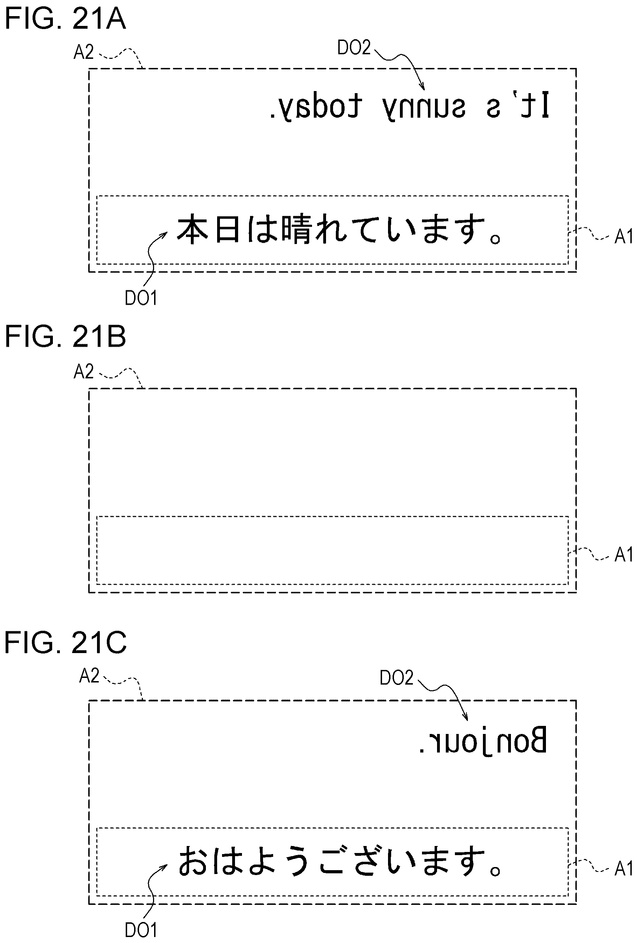

For example, let us assume that characters such as those illustrated in FIG. 21A are displayed at the time when the conversation between the first user U1 and the second user U2 ends. As illustrated in FIG. 21A, Japanese characters (DO1), which are characters of the language used by the first user U1, are displayed in the first display area A1, and English characters (DO2), which are characters of the language used by the second user U2, are displayed in the second display area A2. In such a situation, let us assume that the conversation between the first user U1 and the second user U2 ends, the second user U2 and the third user U3 switch roles, and a conversation between the first user U1 and the third user U3 starts. Here, let us assume that the second language (English) is changed to the third language (French). In this case, as illustrated in FIG. 21B, the characters of the second language displayed in the second display area A2 are erased. Here, as illustrated in FIG. 21B, the characters of the first language displayed in the first display area A1 may also be erased. After that, as illustrated in FIG. 21C, Japanese characters (DO1), which are characters of the language used by the first user U1, are displayed in the first display area A1, and French characters (DO2), which are characters of the language used by the third user U3, are displayed in the second display area A2. By performing this control, according to the projector display system 1 of an embodiment, communication between the interlocutors becomes smooth even if the second language is changed to the third language.

In this way, when the second language (e.g., English) is changed to the third language (e.g., French) different from the second language, the following may be performed. That is, in this case, the program according to an embodiment may cause the electronic device 20 to execute a step of erasing at least the characters of the second language displayed in the second display area A2.

Embodiments of the present disclosure have been described based on the drawings and examples, but note that a variety of variations and amendments may be easily made by one skilled in the art based on the present disclosure. Therefore, note that such variations and amendments are included within the scope of the present disclosure. For example, the functions etc. included in each component can be rearranged in a logically consistent manner, and a plurality of components can be combined into a single component or a single component can be divided into a plurality of components. Although embodiments of the present disclosure have been described while focusing on devices, the embodiments of the present disclosure can also be realized as a method including steps executed by individual component of the device. Embodiments according to the present disclosure can also be realized as a method executed by a processor included in a device, a program, or a storage medium or storage medium on which a program is recorded. Please understand that the scope of the present disclosure also encompasses these forms.

In the present disclosure, "first", "second," and so on are identifiers used to distinguish between such configurations. Regarding the configurations, "first", "second", and so on used to distinguish between the configurations in the present disclosure may be exchanged with each other. For example, the identifiers "first" and "second" can be exchanged between the first display object and the second display object. Exchanging of the identifiers takes place simultaneously. Even after exchanging the identifiers, the configurations are distinguishable from each other. The identifiers may be deleted. The configurations that have had their identifiers deleted are distinguishable from each other by symbols. Just the use of identifiers such as "first" and "second" in the present disclosure is not to be used to interpret the order of the configurations or to justify the existence of identifiers with smaller numbers.

The components and functional blocks included in each embodiment of the present disclosure can be arranged in the same hardware or different hardware as appropriate. Some or all of the microphone, camera, and detection unit in each embodiment of the present disclosure may be included in the same hardware as an electronic device or a projector. Some or all of the controller, storage unit, communication unit, input unit, and clock unit of each embodiment of the present disclosure may be included in a projector as hardware or software. The projector display system using the cloud server of the present disclosure can also be used in a system that does not include the second display area and converts the speech of the first user into text information (character information) and displays the text information to the second user using only the first display area.

### REFERENCE SIGNS

- 1, 1A: projector display system
- 5: transparent screen
- 10: base material
- 11: screen unit
- 12: light-shielding portion
- 20: electronic device
- 21: speech recognition unit
- 22: controller
- 23: storage unit
- 24: display
- 27: communication unit
- 28: input unit
- 29: clock unit
- 30: projector
- 40: microphone
- 60: cloud server
- 61: stand
- 62: positioning member
- U1: first user
- U2: second user
- A1: first display area
- A2: second display area
- DO1: first display object
- DO2: second display object
- θ: half angle of view

## Claims

1. A program that causes an electronic device that displays characters on a display including a first display area and a second display area to perform:
displaying characters of a first language in the first display area;
displaying characters of a second language in the second display area;
displaying either the characters of the first language or the characters of the second language in a horizontally reversed manner; and
based on a first display amount in which the characters of the first language are displayed in the first display area and a second display amount in which the characters of the second language are displayed in the second display area, adjusting at least one of the first display amount or the second display amount.

2. The program according to claim 1,
wherein when the first language and the second language are a same language,
the program causes the electronic device to adjust timings at which a phrase made up of the characters of the first language and a phrase made up of the characters of the second language are displayed on the display to be within a predetermined time.

3. The program according to claim 1,
wherein when the first language and the second language are different languages,
the program causes the electronic device to perform displaying the characters of the second language as a translation of the characters of the first language, and
displaying the characters of the second language based on the characters of the second language being confirmed as a sentence.

4. The program according to claim 1,
wherein when the first language and the second language are different languages,
the program causes the electronic device to perform displaying the characters of the second language as a translation of the characters of the first language, and
not displaying the characters of the second language until the characters of the second language are confirmed as a sentence,

5. The program according to claim 1,
wherein when content of the first display amount does not correspond to content of the second display amount,
the program causes the electronic device to perform adjusting at least one of the first display amount or the second display amount.

6. The program according to claim 5,
wherein the program causes the electronic device to perform adjusting at least one of the first display amount or the second display amount by changing a size of at least one of the characters of the first language or the characters of the second language.

7. The program according to claim 5,
wherein the program causes the electronic device to perform adjusting at least one of the first display amount or the second display amount by changing at least one of a character spacing or a line spacing of at least one of the characters of the first language or the characters of the second language.

8. The program according to claim 1,
wherein the first display area of the display is provided with a light-shielding portion that at least partially blocks transmission of light, and
the program causes the electronic device to perform displaying the characters of the first language in the first display area so as to be shielded by the light-shielding portion.

9. The program according to claim 1,
wherein when the second language is changed to a third language different from the second language,
the program causes the electronic device to perform erasing at least the characters of the second language displayed in the second display area.

10. An electronic device comprising:
a controller that performs control to display characters on a display including a first display area and a second display area,
wherein the controller displays characters of a first language in the first display area,
displays characters of a second language in the second display area,
displays either the characters of the first language or the characters of the second language in a horizontally reversed manner, and
based on a first display amount in which the characters of the first language are displayed in the first display area and a second display amount in which the characters of the second language are displayed in the second display area, adjusts at least one of the first display amount or the second display amount.

11. A method for controlling an electronic device that displays characters on a display including a first display area and a second display area, the method comprising:
displaying characters of a first language in the first display area;
displaying characters of a second language in the second display area;
displaying either the characters of the first language or the characters of the second language in a horizontally reversed manner; and
based on a first display amount in which the characters of the first language are displayed in the first display area and a second display amount in which the characters of the second language are displayed in the second display area, adjusting at least one of the first display amount or the second display amount.
